# EUROPÄISCHE PATENTANMELDUNG

(11) **EP 0 972 920 A2**
(43) Veröffentlichungstag der Anmeldung: **19.01.2000**
(21) Anmeldenummer: 99107237.2
(22) Anmeldetag: 14.04.1999
(51) Int. Cl.: F02B 67/06

(54) **Spannrollenanordnung für einen Endlostrieb an einer Brennkraftmaschine**

(30) Priorität: 16.07.1998 DE 19831864
(71) Anmelder: Volkswagen Aktiengesellschaft, 38436 Wolfsburg (DE)
(72) Erfinder: Kitzmann, Richard, 38442 Wolfsburg (DE)

(57) **Zusammenfassung**

Für eine bauraumoptimierte Spannrollenanordnung im Zuge eines Endlostriebes einer Brennkraftmaschine, vorzugsweise eines Riemenantriebes zum Antrieb von Nebenaggregaten, wird vorgeschlagen, eine Spannrolle, einen diese lagernden Winkelhebel und ein auf diesen Winkelhebel wirkendes elastisch vorgespanntes Spannelement an einer Motorstütze für die Brennkraftmaschine anzuordnen, welche einen der Brennkraftmaschine zugeordneten Lagerflansch und einen einem gesondert von der Brennkraftmaschine ausgebildeten Lager zugeordneten Stützflansch trägt.

## Beschreibung

Die Erfindung betrifft eine Spannrollenanordnung für einen Endlostrieb an einer Brennkraftmaschine gemäß dem Oberbegriff des Patentanspruches 1.

Es ist an Brennkraftmaschinen bekannt, insbesondere an solchen für den Einsatz in Kraftfahrzeugen, in Endlostrieben, vorzugsweise Riemen- oder Kettentrieben Spannrollen zur Einhaltung einer funktionsnotwendigen Spannung innerhalb der Endlostriebe vorzusehen. Für ein betriebsbedingtes Nachstellen solcher Spannrollen ist es bekannt, diese auf einem beispielsweise als Winkelhebel ausgebildeten Element drehbar zu lagern, wobei an einem Ende dieses Hebels ein elastisch vorgespanntes Spannelement angreift. Der Winkelhebel ist dabei selber mit einem Befestigungsauge an einem Gehäuseteil der Brennkraftmaschine, im allgemeinen am Kurbelgehäuse festgelegt.

Der Erfindung liegt die Aufgabe zugrunde, eine gattungsgemäße Spannrollenanordnung derart zu verbessern, daß insgesamt ein geringerer Bauraum beansprucht wird.

Die Lösung dieser Aufgabe gelingt mit den Merkmalen des Patentanspruches 1.

Erfindungsgemäß ist vorgesehen, daß das den Winkelhebel lagernde Gehäuse als Motorstütze für die Brennkraftmaschine ausgebildet ist, wobei dieses Gehäuse einen der Brennkraftmaschine zugeordneten Lagerflansoh aufweist sowie einen Stützflansch, welcher einem gesondert von der Brennkraftmaschine ausgebildeten Lager zugeordnet ist. Vorteilhaft ist hierbei die Integration mehrerer Funktionen in einem Bauteil, wobei insgesamt eine äußerst bauraumsparende Anordnung erzielt wird. Die Befestigung des Winkelhebels erfolgt hierbei unter Abweichung vom Stand der Technik nicht am Gehäuse der Brennkraftmaschine, sondern an der Motorstütze selber.

Üblicherweise werden Motorstützen verwendet, welche als eigenständiges, zumeist massives und steifes Bauteil zwischen einem kraftfahrzeugaufbauseitig angeschlagenen Lager und der Brennkraftmaschine angeordnet ist. Vorteilhafterweise wird der ohnehin für die Motorstütze beanspruchte Bauraum hier durch die Integration der Spannrolle genutzt.

Insgesamt ergibt sich ein verringerter Bauteilaufwand sowie eine Gewichtsreduktion. Die erfindungsgemäße Spannrolle kann mitsamt der Motorstütze als Vormontageeinheit bereit gestellt werden.

In weiterer vorteilhafter Ausgestaltung kann das den Winkelhebel der Spannrolle tragende Gehäuse weitere Flanschflächen zur Lagerung von weiteren Bauteilen, wie beispielsweise einem Ölkühler und/oder einem Ölfilter aufweisen.

Weitere Vorteile und Merkmale der Erfindung ergeben sich aus dem nachfolgend anhand einer Zeichnung näher erläuterten Ausführungsbeispiel.

Es zeigen:

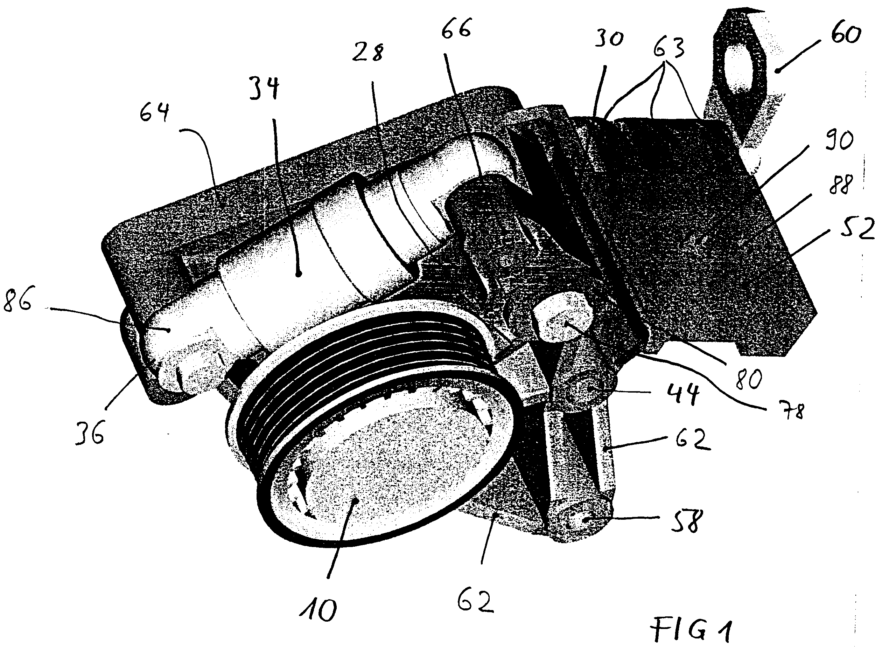

- Figur 1: eine perspektivische Ansicht der erfindungsgemäßen Anordnung,

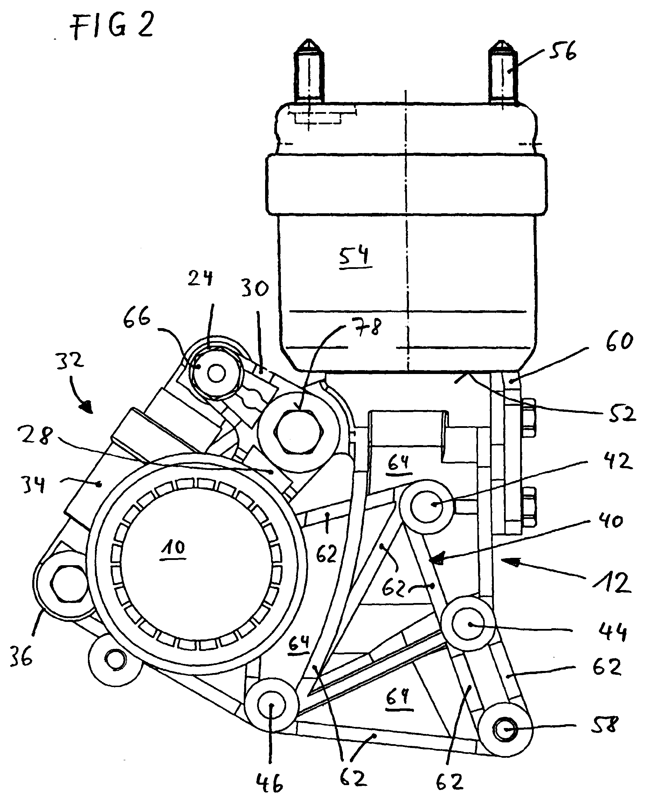

- Figur 2: eine Seitenansicht mit Lager,

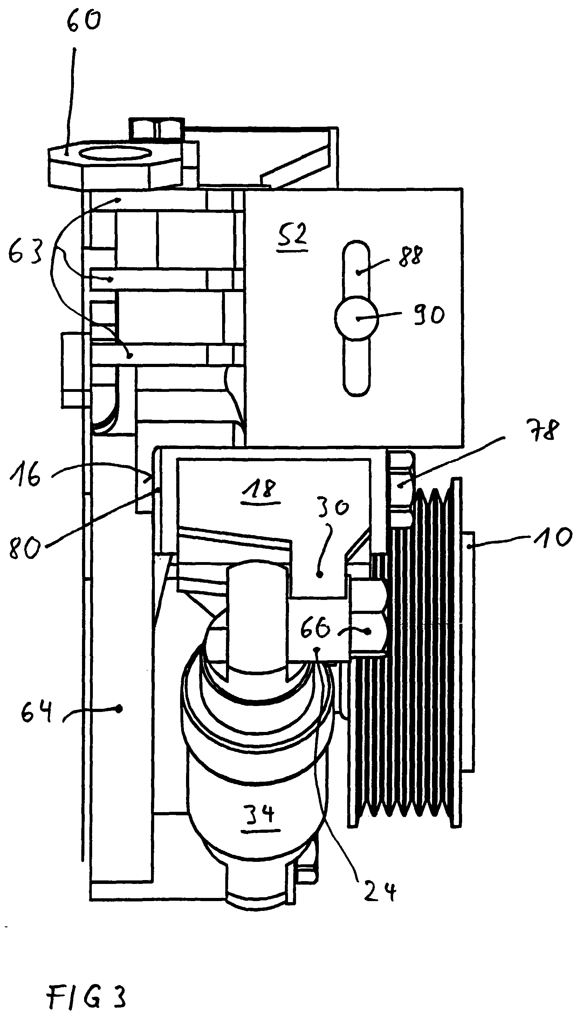

- Figur 3: eine Draufsicht zu Figur 2 ohne Lager,

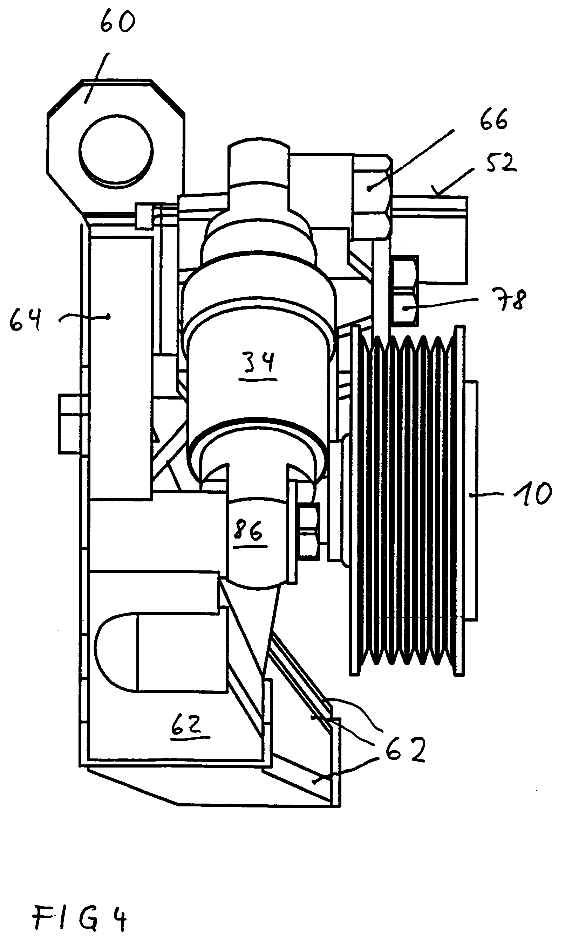

- Figur 4: eine Seitenansicht zu Figur 2 ohne Lager,

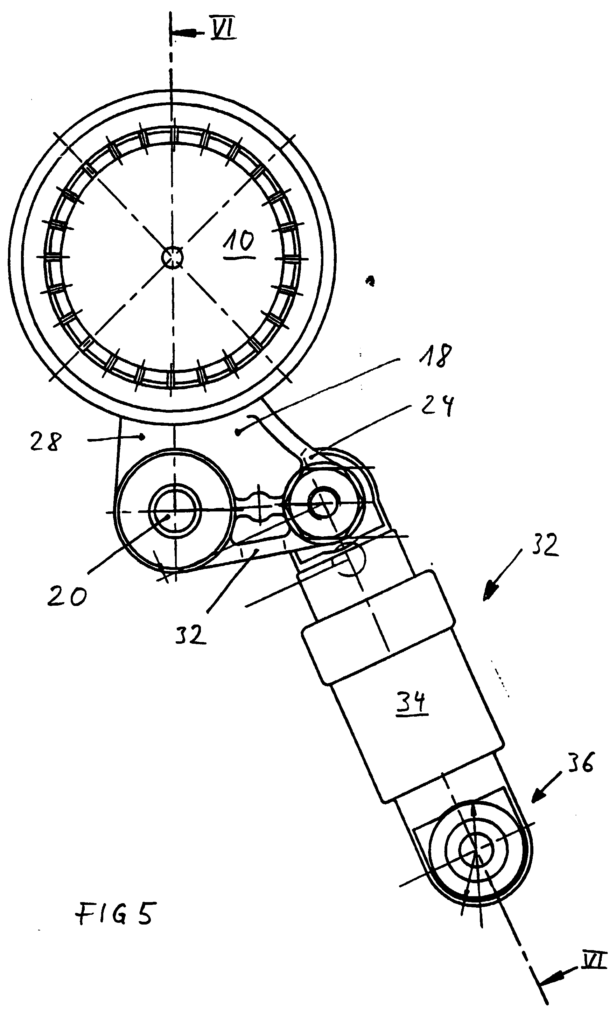

- Figur 5: Einzelteile der Spannrollenanordnung mit herausgeschwenktem Spannelement,
- Figur 6: einen Schnitt entlang der Linie VI-VI gemäß Figur 5 und
- Figur 7: eine Einbausituation der Spannrollenanordnung.

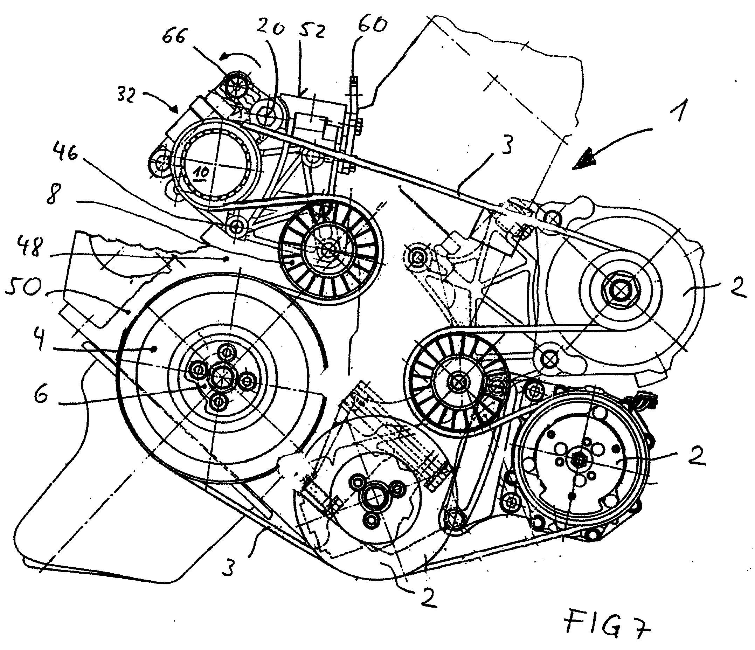

Ein insgesamt mit 1 bezeichneter Endlostrieb für den Antrieb von nicht näher gezeigten Nebenaggregaten 2 einer in Figur 7 schematisch angedeuteten Brennkraftmaschine weist einen mehrrilligen Keilrippenriemen 3 auf. Dieser läuft, ausgehend von einer Riemenscheibe 4 auf einem Kurbelwellenstumpf 6 der Brennkraftmaschine über eine Umlenkrolle 8 einer Spannrollenanordnung zu einer Spannrolle 10 und von dieser zu den weiteren, nicht gezeichneten Nebenaggregaten 2 und von diesen wiederum auf die Riemenscheibe 4.

Die Spannrollenanordnung umfaßt ein als Motorstütze 12 für die Brennkraftmaschine ausgebildetes Gehäuse 14. An einem Flansch 16 dieses Gehäuses 14 ist ein Winkelhebel 18 um einen Drehpunkt 20 drehbar gelagert, wobei an einem der Enden 22, 24 dieses Winkelhebels 18 die Spannrolle 10 drehbar gelagert ist.

Zwischen diesem Drehpunkt 20 und der Spannrolle 10 erstreckt sich ein erster Schenkel 28 des Winkelhebels 18, nahezu rechtwinkelig dazu verlaufend erstreckt sich zu dem anderen Ende 24 hin ein zweiter Schenkel 30. An diesem anderen Ende 24 greift ein elastisch vorgespanntes Spannelement 32 in Form eines hydraulischen Spanners 34 an diesen Winkelhebel an. Am gegenüberliegenden Ende 36 dieses Spanners 34 ist dieser an einem Befestigungsauge 38 des Gehäuses 14 schwenkbar abgestützt.

Die Motorstütze 12 weist einen integral ausgebildeten Lagerflansch 40 mit insgesamt drei Befestigungspunkten 42, 44, 46 auf, durch welche mittels Schrauben eine ortsfeste Verbindung zwischen dieser Motorstütze 12 und einer Stirnseite 48 des Kurbelgehäuses 50 der Brennkraftmaschine bereitgestellt wird.

Nahezu senkrecht zu diesem Lagerflansch 40 trägt die Motorstütze 12 einen Stützflansch 52, an welchem ein gesondert von der Brennkraftmaschine ausgebildetes Lager 54 befestigbar ist. Dieses Lager 54 wiederum weist Befestigungsmittel 56 zum aufbauseitigen Anschlagen auf.

Die im Zuge des Endlostriebes 1 zwischen kurbelwellenseitiger Riemenscheibe 4 und Spannrolle 10 angeordnete Umlenkrolle 8 ist in einem weiteren, der Motorstütze 12 zugeordneten Befestigungsauge 58 drehbar abgestützt.

Wiederum nahezu rechtwinkelig zu dem Lagerflansch 40 und zu dem Stützflansch 52 liegend ist eine hier als gesondertes Bauteil dargestellte Trageöse 60 für den Transport der Brennkraftmaschine samt Spannrollenanordnung angeordnet.
Diese Trageöse 60 kann in Abweichung von dem gezeigten Ausführungsbeispiel ein weiterer, integraler Bestandteil der Motorstütze 12 sein.

Die Motorstütze 12 ist als Aluminium-Druckgußteil ausgebildet und weist auf ihrer der Brennkraftmaschine zugewandten Seite eine mit Rippen 62, 63 versehene Wandung 64 auf.

An dem Ende 24 des Winkelhebels 18, an welchem das elastisch vorgespannte Spannelement 32 angreift, ist der Schenkel 30 mit einer integral ausgebildeten Kraftangriffsfläche 66 zum Ansetzen eines formschlüssigen Werkzeuges ausgestattet. An dieser Angriffsfläche 66 wird bei der Montage des Endlostriebes 1 ein schlüsselartiges Werkzeug in Pfeilrichtung gemäß Figur 7 entgegen dem Uhrzeigersinn wirkend angesetzt, so daß die Spannrolle 10 um den Drehpunkt 20 des Winkelhebels 18 schwenkend in Figur 7 nach rechts verschwenkt wird. Hierdurch wird das Aufziehen des Endlostriebes 1 erheblich erleichtert.

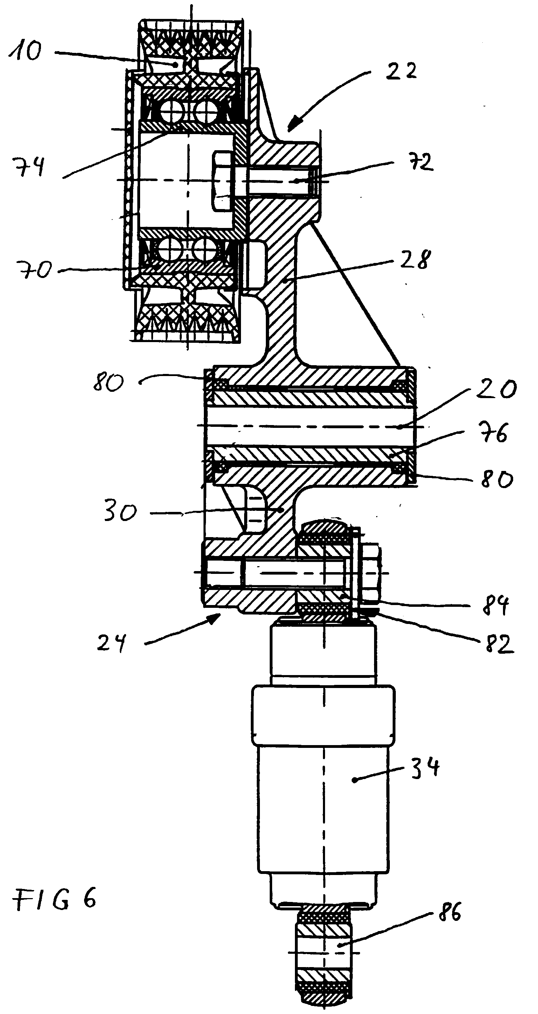

Die Spannrolle 10 ist mit einem zweireihigen Kugellager 70 sich auf einem mittels einer Schraube 72 am Winkelhebel 18 festgelegten Innentopf 74 abstützend gelagert. Der Drehpunkt 20 des Winkelhebels 18 wird von einer innerhalb einer Spannhülse 76 geführten Schraube 78 durchsetzt, wobei gemäß Figur 6 links- und rechtsliegend jeweils eine Unterlegscheibe 80 angeordnet ist.

Der in seinem Inneren mit einer vorgespannten Feder und mit einer Hydraulikfüllung versehene Spanner 34 ist unter Zwischenschaltung einer elastischen Abkopplung 82 und unter Vermittlung einer Hülse 84 schwenkbar am Winkelhebel 18 angeschlagen. In entsprechender Weise ist das andere Auge 86 des Spanners 34 an der Motorstütze 12 festgelegt.

Der Stützflansch 52 ist mit einer nutartigen Vertiefung 88 und einer zentrisch darin angeordneten Durchgangsöffnung 90 für ein dem Lager 54 zugeordnetes, nicht gezeigtes Befestigungsmittel versehen.

Der Spanner 34 sorgt zusammen mit dem durch die vergleichsweise groß dimensionierten Scheiben, wie Riemenscheibe 4, Umlenkrolle 8 und Spannrolle 10, bedingten großen Umschlingungswinkel für eine vergrößerte Lebensdauer des gesamten Endlostriebes 1.

## Patentansprüche

1. Spannrollenanordnung für einen Endlostrieb (1) an einer Brennkraftmaschine, mit einem Winkelhebel (18), welcher an einem seiner Enden (22, 24) eine Spannrolle (10) lagert, um einen Drehpunkt (20) drehbar an einem Flansch (16) eines Gehäuses (14) gelagert ist und an seinem anderen Ende (24) von einem elastisch vorgespannten Spannelement (32) beaufschlagt wird,
dadurch gekennzeichnet, daß
das Gehäuse (14) als Motorstütze (12) für die Brennkraftmaschine ausgebildet ist und einen der Brennkraftmaschine zugeordneten Lagerflansch (40) und einen einem gesondert von der Brennkraftmaschine ausgebildeten Lager (54) zugeordneten Stützflansch (52) aufweist.
